# EUROPEAN PATENT APPLICATION

(11) **EP 4 763 500 A1**
(43) Date of publication of application: **24.06.2026**
(21) Application number: 24895645.0
(22) Date of filing: 09.07.2024
(51) Int. Cl.: B29D 30/06, B29C 33/30

(54) **MOLD REPLACEMENT APPARATUS AND REPLACEMENT METHOD**

(30) Priority: 27.11.2023 CN 202311594270
(71) Applicant: ARP Technologies (Suzhou) Co., Ltd., Suzhou, Jiangsu 215216 (CN)
(72) Inventor: ZHOU, Enquan, Suzhou, Jiangsu 215216 (CN); ZHANG, Yecheng, Suzhou, Jiangsu 215216 (CN); ZHANG, Zhengluo, Suzhou, Jiangsu 215216 (CN)
(74) Representative: HGF
(86) International application number: PCT/CN2024/104369
(87) International publication number: WO 2025/112542

(57) **Abstract**

Provided are a mold replacement device and a mold replacement method. The mold replacement device includes a transport trolley (100), a translation and lifting device (200), a mold storage platform (300), and a mold transfer device (400). The transport trolley (100) is configured to reciprocate between a mold storage position and a mold working position. The translation and lifting device (200) is disposed on the transport trolley (100) and configured to move a mold along at least one of a first direction or a second direction. The mold storage platform (300) is fixedly connected to the transport trolley (100) and located below the translation and lifting device (200), where the mold storage platform (300) is configured to carry the mold. The mold transfer device (400) is disposed below the mold storage platform (300) and configured to lift the mold on the mold storage platform (300) along the second direction and transfer the mold on the mold storage platform (300) along the first direction.

## Description

This application claims priority to Chinese Patent Application No. 202311594270.5 filed with the China National Intellectual Property Administration (CNIPA) on Nov. 27, 2023, the disclosure of which is incorporated herein by reference in its entirety.

### TECHNICAL FIELD

The present application relates to the technical field of tire manufacturing, for example, a mold replacement device and a mold replacement method.

### BACKGROUND

Tire vulcanization is one of the most critical processes in tire manufacturing. Since tire manufacturers produce tires of various types and specifications, the molds for vulcanization are also diverse. During the production process, molds must be frequently replaced to produce different tires. In the related art, mold replacement in the tire industry is still mainly performed manually. Manual mold replacement suffers from problems such as long mold replacement time, high labor intensity, and safety hazards to operators due to the large weight of the molds. These problems make it difficult to satisfy the requirements of tire manufacturers for a highly automated production process.

Automatic mold replacement devices in the related art mainly include the types below.

The related art provides a telescopic arm structure for an automatic mold replacement vehicle for a vulcanizing machine. In the structural form, an electric cylinder, a ball leadscrew, and other structures are used to drive a three-stage arm to remove an old mold and transport a new mold. This solution has two main problems. First, the telescopic arm is longer, and the front end of the third-stage arm lacks support, resulting in larger deflection. As a result, even when the precision ball leadscrew is used, the smooth extension and retraction cannot be achieved as expected. Second, two rows of telescopic arms occupy a large amount of space and thus are unsuitable for use in front of the vulcanizing machine with limited space, limiting the versatility.

The related art further provides a mold mounting fixture for a vulcanizing machine. Linear guide rails are mounted on a fixture trolley, and the mold is placed on a positioning plate. After the fixture trolley moves to the front of the vulcanizing machine and is positioned, the positioning plate moves to the designated position via the linear guide rails to replace the mold. The main problem of this solution is that the guide rails are too long, and there is not much room for movement in actual factories, resulting in lower practical applicability.

The related art further provides a mold transport device. Components such as guide rails, a mold frame trolley, and a hoist form the mold transport device. The mold frame trolley is responsible for entering and exiting a vulcanization chamber, and the hoist is responsible for lifting and lowering the mold. When the trolley reaches the vulcanizing machine station and support legs are extended, the mold frame enters the designated station in the vulcanization chamber via the guide rails. The hoist lowers the hook, picks up the old mold, and transports the old mold back onto the trolley, and then the new mold is transported in the same method, thereby completing the entire transport and replacement operation. The main problem of this solution is that the width of the mold frame trolley is greater than at least the diameter of the mold. In the actual vulcanizing machine, the frame trolley cannot enter the vulcanization chamber, and the mold cannot be replaced.

To sum up, the related art has a common problem that the entire mold replacement process requires excessive manual intervention in the mold loading and unloading, making it impossible to fully automate the mold replacement process. Therefore, there is an urgent need to provide a new type of mold replacement device to solve the preceding technical problems in the related art.

### SUMMARY

The present application provides a mold replacement device capable of automatically replacing an old mold with a new mold, thereby improving mold replacement efficiency. Moreover, the device occupies a relatively small space, thereby being capable of satisfying different mold replacement requirements.

The mold replacement device includes a transport trolley, a translation and lifting device, a mold storage platform, and a mold transfer device. The transport trolley is configured to reciprocate between a mold storage position and a mold working position. The translation and lifting device is disposed on the transport trolley and is configured to move a new mold or an old mold along at least one of the first direction or the second direction. The mold storage platform is fixedly connected to the transport trolley and located below the translation and lifting device. The mold storage platform is configured to carry the new mold or the old mold. The mold transfer device is disposed below the mold storage platform and is configured to lift the new mold or the old mold on the mold storage platform along the second direction and transfer the new mold or the old mold on the mold storage platform along the first direction.

In an embodiment, the mold transfer device includes a first-stage transfer guide rail extending along the first direction, the first-stage transfer guide rail is fixedly connected to the transport trolley, the first-stage transfer guide rail is slidably connected to a lifting platform, and the lifting platform is configured to lift the new mold or the old mold along the second direction and transfer the new mold or the old mold.

In an embodiment, the mold transfer device further includes: a first drive mechanism fixedly connected to the first-stage transfer guide rail; a second-stage transfer guide rail, where the second-stage transfer guide rail is slidably connected to the first-stage transfer guide rail and extends along the first direction; a second drive mechanism fixedly connected to the second-stage transfer guide rail; and the lifting platform.

The second-stage transfer guide rail is connected to an output end of the first drive mechanism, and an output end of the second drive mechanism is connected to the lifting platform so that the lifting platform is slidably connected to the second-stage transfer guide rail along the first direction.

In an embodiment, a support roller is fixedly connected to one end of the second-stage transfer guide rail facing away from the transport trolley.

In an embodiment, the translation and lifting device includes a first-stage translational guide rail extending along the first direction, a third drive mechanism, and a hoisting mechanism, where the third drive mechanism and the hoisting mechanism are disposed on the first-stage translational guide rail, an output end of the third drive mechanism is connected to the hoisting mechanism, the hoisting mechanism is slidably connected to the first-stage translational guide rail, and the hoisting mechanism is configured to hoist the new mold or the old mold.

In an embodiment, the translation and lifting device further includes a fourth drive mechanism and a second-stage translational guide rail, where the fourth drive mechanism is disposed on the first-stage translational guide rail, the second-stage translational guide rail is slidably connected to the first-stage translational guide rail and extends along the first direction, an output end of the fourth drive mechanism is connected to the second-stage translational guide rail, and the hoisting mechanism is slidably connected to the second-stage translational guide rail.

In an embodiment, the translation and lifting device further includes a fifth drive mechanism and a third-stage translational guide rail, where the fifth drive mechanism is disposed on the first-stage translational guide rail, the third-stage translational guide rail is connected to an output end of the fifth drive mechanism, the third-stage translational guide rail extends along the first direction and is slidably connected to the first-stage translational guide rail and the second-stage translational guide rail, the hoisting mechanism is slidably connected to the third-stage translational guide rail, the positioning cylinder is disposed at one end of the second-stage translational guide rail facing away from the transport trolley, and an output end of the positioning cylinder is insertable into a positioning hole of an external device.

In an embodiment, the hoisting mechanism includes a movable platform, a fixed bracket, a flexible connector, a sixth drive mechanism, and a fixed pulley. The sixth drive mechanism and the fixed pulley are disposed on the movable platform. The movable platform is slidably connected to the first-stage translational guide rail. The fixed bracket is connected to an output end of the sixth drive mechanism, where the fixed bracket is slidably connected to the first-stage translational guide rail and is capable of reciprocating along the first direction. A first end of the flexible connector is fixedly connected to the fixed bracket, and a second end of the flexible connector passes around the fixed pulley and is suspended with a mold clamp configured to fix the new mold or the old mold.

In an embodiment, the mold replacement device further includes: a lifting base fixedly connected to the transport trolley; a lifting drive mechanism fixedly connected to the lifting base; and a gantry assembly connected to an output end of the lifting drive mechanism, where the lifting drive mechanism is configured to enable the gantry assembly to slide on the lifting base along the second direction, and the gantry assembly is fixedly connected to the translation and lifting device.

The present application further provides a mold replacement method applied to the mold replacement device described in any of the preceding solutions. The method includes the steps below.

The transport trolley moves to the mold storage position, and the mold transfer device moves and lifts the new mold at the mold storage position to place the new mold onto the mold storage platform. The transport trolley moves to the mold working position, and the mold transfer device lifts the new mold on the mold storage platform and then moves to a preset position. After performing translation and lifting, the translation and lifting device removes the old mold from the mold working position and places the old mold onto the mold storage platform. The translation and lifting device removes the new mold from the mold transfer device and mounts the new mold to the mold working position. The transport trolley moves to the mold storage position, and the mold transfer device lifts and moves the old mold on the mold storage platform to place the old mold at the mold storage position.

### BRIEF DESCRIPTION OF DRAWINGS

FIG. 1 is an axonometric view of a mold replacement device according to an embodiment of the present application.
FIG. 2 is an axonometric view of a mold transfer device according to an embodiment of the present application.
FIG. 3 is an axonometric view of a translation and lifting device according to an embodiment of the present application.
FIG. 4 is an axonometric view of a hoisting mechanism according to an embodiment of the present application.

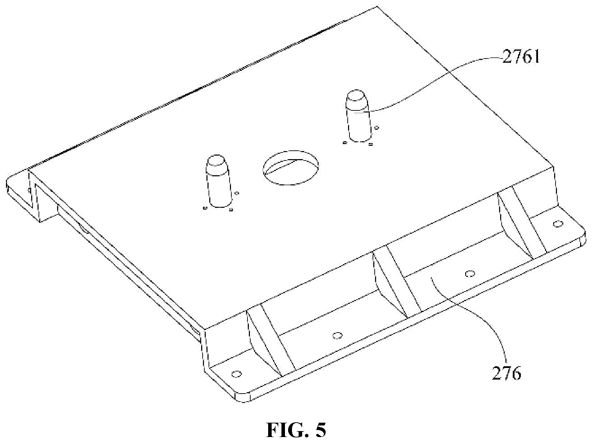

FIG. 5 is an axonometric view of a mold clamp according to an embodiment of the present application.
FIG. 6 is a flowchart of a mold replacement method according to an embodiment of the present application.

### Reference list

- 11: new mold
- 12: old mold
- 100: transport trolley
- 200: translation and lifting device
- 201: positioning cylinder
- 210: first-stage translational guide rail
- 220: third drive mechanism
- 230: fourth drive mechanism
- 240: second-stage translational guide rail
- 250: fifth drive mechanism
- 260: third-stage translational guide rail
- 270: hoisting mechanism
- 271: movable platform
- 2711: avoidance hole
- 272: sixth drive mechanism
- 273: fixed pulley
- 274: fixed bracket
- 275: flexible connector
- 276: mold clamp
- 2761: positioning post
- 300: mold storage platform
- 400: mold transfer device
- 410: first-stage transfer guide rail
- 420: lifting platform
- 430: first drive mechanism
- 440: second-stage transfer guide rail
- 441: support roller
- 450: second drive mechanism
- 510: lifting base
- 520: lifting drive mechanism
- 530: gantry assembly

### DETAILED DESCRIPTION

In the description of the present application, terms "joined", "connected", and "secured" are to be understood in a broad sense unless otherwise expressly specified and limited. For example, the term "connected" may refer to "securely connected", "detachably connected", or "integrated", may refer to "mechanically connected" or "electrically connected", may refer to "connected directly" or "connected indirectly through an intermediary", or may refer to "connected inside two elements" or "an interaction relation between two elements". For those of ordinary skill in the art, specific meanings of the preceding terms in the present application may be construed according to specific circumstances.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of this embodiment, orientations or position relations indicated by terms such as "upper", "lower", and "right" are based on the drawings. These orientations or position relations are intended only to facilitate description and simplify operation and not to indicate or imply that a device or element referred to must have such particular orientations or must be configured or operated in such particular orientations. Thus, these orientations or position relations are not to be construed as limiting the present application. Additionally, terms "first" and "second" are used for distinguishing between descriptions and have no special meanings.

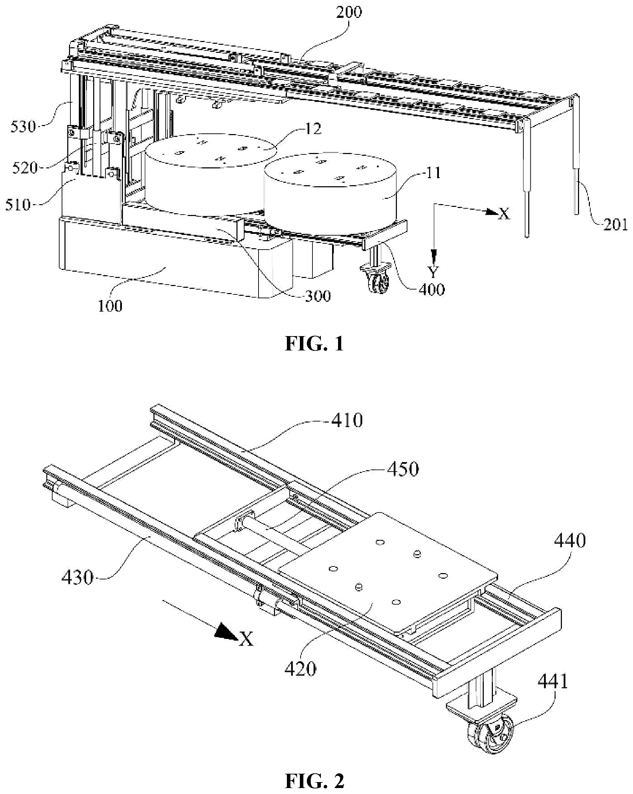

In this embodiment, the first direction is the X direction shown in FIGS. 1 to 3, which is the horizontal direction, and the second direction is the Y direction shown in FIG. 1, which is the vertical direction. The first direction and the second direction are perpendicular to each other.

Referring to FIG. 1, in this embodiment, the mold replacement device includes a transport trolley 100, a translation and lifting device 200, a mold storage platform 300, and a mold transfer device 400. The transport trolley 100 is configured to reciprocate between a mold storage position and a mold working position. The translation and lifting device 200 is disposed on the transport trolley 100 and is configured to move a new mold 11 or an old mold 12 along at least one of the first direction or the second direction. The mold storage platform 300 is fixedly connected to the transport trolley 100 and located below the translation and lifting device 200. The mold storage platform 300 is configured to carry the new mold 11 or the old mold 12. The mold transfer device 400 is disposed below the mold storage platform 300 and is configured to lift the new mold 11 or the old mold 12 on the mold storage platform 300 along the second direction and transfer the new mold 11 or the old mold 12 on the mold storage platform 300 along the first direction.

In an embodiment, when the mold replacement device is in use, the transport trolley 100 first moves to the mold storage position. The mold transfer device 400 takes the new mold 11, moves the new mold 11 along the first direction and the second direction, and places the new mold 11 onto the mold storage platform 300. Then, the transport trolley 100 moves to the mold working position (in this embodiment, a tire vulcanizing machine is at the mold working position). At this time, the mold transfer device 400 lifts the new mold 11 and transfers the new mold 11 along the first direction. The translation and lifting device 200 removes the old mold 12 from the mold working position and transports the old mold 12 along the first direction and the second direction to the mold storage platform 300. The translation and lifting device 200 then transports the new mold 11 on the mold transfer device 400 to the mold working position, completing the mold replacement. Finally, the transport trolley 100 transports the old mold 12 to the mold storage position for storage of the old mold 12. The mold replacement device is provided with the mold storage platform 300 and the mold transfer device so that while the old mold 12 is removed, the new mold 11 can be replaced, without manual intervention or operation, thereby automatically replacing the old mold 12 with the new mold 11. In this case, mold replacement efficiency can be improved. Moreover, the mold replacement device has a simple and reliable structure and occupies a relatively small space, thereby being capable of satisfying the mold replacement requirements of different operating spaces.

In this embodiment, the transport trolley 100 is fixedly connected to a lifting base 510, the lifting base 510 is fixedly connected to a lifting drive mechanism 520, and an output end of the lifting drive mechanism 520 is connected to a gantry assembly 530 so that the gantry assembly 530 slides on the lifting base 510 along the second direction; and the gantry assembly 530 is fixedly connected to the translation and lifting device 200. In this manner, the mold replacement device can raise or lower the translation and lifting device 200 so that the mold replacement device can be adapted to molds or factories of different heights, thereby improving the applicability of the mold replacement device.

As shown in FIGS. 1 and 2, in this embodiment, the mold transfer device 400 includes a first-stage transfer guide rail 410 extending along the first direction. The first-stage transfer guide rail 410 is fixedly connected to the transport trolley 100. The first-stage transfer guide rail 410 is slidably connected to a lifting platform 420. The lifting platform 420 is configured to lift the new mold 11 or the old mold 12 along the second direction and transfer the new mold 11 or the old mold 12. The first-stage transfer guide rail 410 can position and guide the movement of the lifting platform 420, thereby ensuring the smooth movement of the lifting platform 420. In this manner, the lifting platform 420 can be more stable and reliable when lifting and transporting the new mold 11 or the old mold 12.

In an embodiment, the first-stage transfer guide rail 410 is fixedly connected to a first drive mechanism 430 and slidably connected to a second-stage transfer guide rail 440 extending along the first direction, the second-stage transfer guide rail 440 is connected to an output end of the first drive mechanism 430, a second drive mechanism 450 is fixedly disposed on the second-stage transfer guide rail 440, and an output end of the second drive mechanism 450 is connected to the lifting platform 420 so that the lifting platform 420 is slidably connected to the second-stage transfer guide rail 440 along the first direction. In this embodiment, two stages of guide rails are used to achieve the movement of the lifting platform 420 along the first direction, thereby not only increasing the movement range of the lifting platform 420, but also reducing the size of the mold transfer device 400. In this manner, it is ensured that the mold replacement device can be adapted for use in factories with limited space, thereby improving convenience of use of the mold replacement device.

In an embodiment, a support roller 441 is fixedly connected to one end of the second-stage transfer guide rail 440 facing away from the transport trolley 100. The support roller 441 supports the movement of the second-stage transfer guide rail 440, thereby ensuring that the second-stage transfer guide rail 440 remains horizontal. Moreover, the support roller 441 can reduce the pressure exerted by the second-stage transfer guide rail 440 on the first-stage transfer guide rail 410, thereby reducing deformation, avoiding the need to manufacture the second-stage transfer guide rail 440 and the first-stage transfer guide rail 410 with excessive strength, and reducing production costs. Moreover, the support roller 441 can reduce the friction between the second-stage transfer guide rail 440 and the first-stage transfer guide rail 410, thereby extending the service life of the mold transfer device 400 while ensuring smooth mold transport.

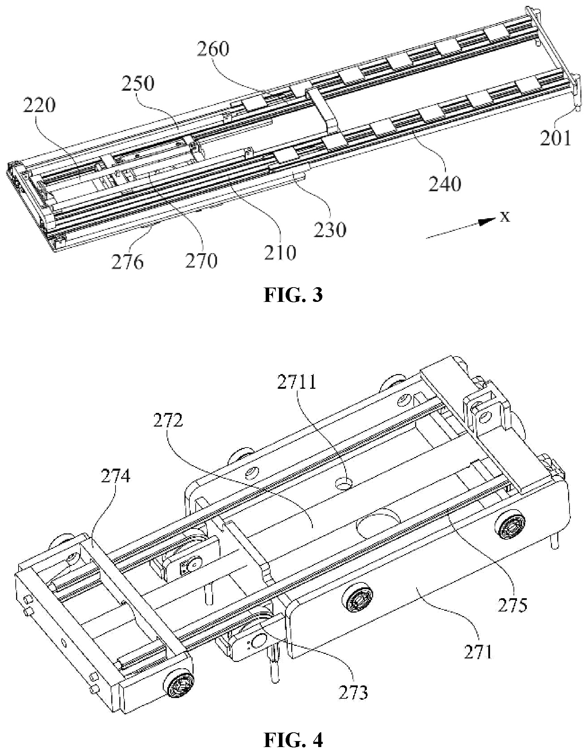

As shown in FIGS. 1 and 3, the translation and lifting device 200 includes a first-stage translational guide rail 210 extending along the first direction. A third drive mechanism 220 is disposed on the first-stage translational guide rail 210. An output end of the third drive mechanism 220 is connected to a hoisting mechanism 270. The hoisting mechanism 270 is slidably connected to the first-stage translational guide rail 210. The hoisting mechanism 270 is configured to hoist the new mold 11 or the old mold 12. The first-stage translational guide rail 210 can position and guide the movement of the hoisting mechanism 270, thereby ensuring that the hoisting mechanism 270 can move smoothly along the first direction when hoisting the mold. In this manner, the operation stability of the hoisting mechanism 270 can be improved.

In an embodiment, a fourth drive mechanism 230 is further disposed on the first-stage translational guide rail 210, the first-stage translational guide rail 210 is slidably connected to a second-stage translational guide rail 240 extending along the first direction, an output end of the fourth drive mechanism 230 is connected to the second-stage translational guide rail 240, and the hoisting mechanism 270 is slidably connected to the first-stage translational guide rail 210 and the second-stage translational guide rail 240. In this embodiment, two stages of guide rails are used to achieve the movement of the hoisting mechanism 270 along the first direction, and the hositing mechanism 270 can slide on the first-stage translational guide rail 210 and the second-stage translational guide rail 240, thereby not only increasing the movement range of the hoisting mechanism 270, but also reducing the size and floor space of the translation and lifting device 200. In this manner, it is ensured that the mold replacement device can be adapted for use in factories with limited space, thereby improving convenience of use of the mold replacement device.

In an embodiment, a fifth drive mechanism 250 is further disposed on the first-stage translational guide rail 210, an output end of the fifth drive mechanism 250 is connected to a third-stage translational guide rail 260, the third-stage translational guide rail 260 extends along the first direction and is slidably connected to the first-stage translational guide rail 210 and the second-stage translational guide rail 240, the hoisting mechanism 270 is slidably connected to the third-stage translational guide rail 260, each of positioning cylinders 201 is disposed at one end of the second-stage translational guide rail 240 facing away from the transport trolley 100, and an output end of the positioning cylinder 201 is insertable into a positioning hole of an external device (in this embodiment, the external device is the tire vulcanizing machine or a rack at the mold storage position). The two stages of guide rails are used to achieve the movement of the hoisting mechanism 270 along the first direction, thereby increasing the movement range of the hoisting mechanism 270 and reducing the floor space. However, since a step with a height difference exists between the first-stage translational guide rail 210 and the second-stage translational guide rail 240, the third-stage translational guide rail 260 can reduce the vibration of the hoisting mechanism 270 when the hoisting mechanism 270 passes over the step, thereby ensuring that the hoisting mechanism 270 can maintain smooth movement. The positioning cylinders 201 can position the mold replacement device so that it is ensured that when the hoisting mechanism 270 moves to the farthest end of the second-stage translational guide rail 240, the hoisting mechanism 270 can be accurately aligned with the new mold 11 or the old mold 12 below for hoisting, thereby improving working efficiency.

In an embodiment, rollers are provided between the first-stage translational guide rail 210 and the second-stage translational guide rail 240, between the third-stage translational guide rail 260 and the first-stage translational guide rail 210, and between the first-stage translational guide rail 210 and the second-stage translational guide rail 240 so that the sliding friction between the guide rails can be converted into the rolling friction, thereby reducing the friction. The details are not repeated here.

As shown in FIGS. 3 and 4, the hoisting mechanism 270 includes a movable platform 271, a fixed bracket 274, and flexible connectors 275. The movable platform 271 is slidably connected to the first-stage translational guide rail 210, and a sixth drive mechanism 272 and fixed pulleys 273 are disposed on the movable platform 271. The fixed bracket 274 is connected to an output end of the sixth drive mechanism 272, and the fixed bracket 274 is slidably connected to the first-stage translational guide rail 210 and is capable of reciprocating along the first direction. A first end of the flexible connector 275 is fixedly connected to the fixed bracket 274, and a second end of the flexible connector 275 passes around the fixed pulley 273 and is suspended with a mold clamp 276 configured to fix the new mold 11 or the old mold 12. The movable platform 271 changes the position on the first-stage translational guide rail 210 and further slides on the third-stage translational guide rail 260 to change the position. The output end of the sixth drive mechanism 272 is connected to the fixed bracket 274. Driven by the sixth drive mechanism 272, the fixed bracket 274 can reciprocate linearly along the first direction, thereby moving toward or away from the movable platform 271. The fixed bracket 274 is fixedly connected to the flexible connector 275. The second end of the flexible connector 275 passes around the fixed pulley 273 on the movable platform 271 and is suspended with the mold clamp 276 below. Therefore, when the fixed bracket 274 is driven away from the movable platform 271, the flexible connector 275 can drive the mold clamp 276 to move upward, and when the fixed bracket 274 is driven toward the movable platform 271, the flexible connector 275 can drive the mold clamp 276 to move downward, thereby achieving the hoisting of the mold clamp 276. The hoisting device moves horizontally through the driven end of the flexible connector 275, thereby occupying less longitudinal space, reducing the space occupied by the hoisting structure, and being more suitable for the hoisting operations in confined spaces. Moreover, the hoisting structure is more stable during hoisting, and the efficiency of hoisting operations can be improved.

In this embodiment, the flexible connector 275 is specifically a chain. Compared with the steel wire rope, the chain does not require a crimped end fitting at the connection end so that the connection portion between the flexible connector 275 and the mold clamp 276 can be made shorter, thereby further reducing the longitudinal space occupied by the hoisting device.

In an embodiment, the flexible connector 275 is bolted to the mold clamp 276. The flexible connector 275 may be directly provided with an external thread portion or a threaded hole that mates with the mold clamp 276, or the connection end of the flexible connector 275 may be fixed to the mold clamp 276 by a bolt and a nut. No specific restrictions are made here. The bolt connection facilitates disassembly and installation so that the replacement of the mold clamp 276 can be facilitated, thereby improving hoisting efficiency and maintenance efficiency of the mold clamp 276. The details are not repeated here.

In an embodiment, multiple first rollers are arranged at intervals on each of the sidewalls at two ends of the movable platform 271, and the multiple first rollers are of the same height. The multiple first rollers can further ensure that the movable platform 271 moves smoothly and reliably on the slide rail with low friction and can provide a guiding function, thereby ensuring the smooth operation of the movable platform 271 and the sixth drive mechanism 272 on the movable platform 271. Moreover, a second roller of the same height as the first rollers is disposed on each of the sidewalls at two ends of the fixed bracket 274. The second rollers on the fixed bracket 274 can ensure that the fixed bracket 274 reciprocates smoothly and linearly on the slide rail, thereby improving movement stability. The details are not repeated here.

In this embodiment, the first rollers and the second rollers are composite rollers, which not only have a longer service life and a lower purchase cost, but also provide a shock absorption function, thereby further ensuring the stable operation of the hoisting device.

In an embodiment, the movable platform 271 is provided with avoidance holes 2711, positioning posts 2761 protrude from the top wall of the mold clamp 276, and the positioning posts 2761 are insertable into the avoidance holes 2711. The avoidance holes 2711 and the positioning posts 2761 are provided so that it can be ensured that after the mold clamp 276 moves upward, the positioning posts 2761 are inserted into the avoidance holes 2711, the mold clamp 276 can be limited by the movable platform 271, and the mold clamp 276 and the new mold 11 or the old mold 12 fixed by the mold clamp 276 can be prevented from shaking when the movable platform 271 moves along the first direction, thereby improving the working reliability of the translation and lifting device 200.

In an embodiment, four fixed pulleys 273 and four flexible connectors 275 are provided. The centers of the four fixed pulleys 273 form a rectangle. The heights of the two fixed pulleys 273 closer to the fixed bracket 274 are lower than the heights of the other two fixed pulleys 273. The connection portions between the two flexible connectors 275 that pass around the fixed pulleys 273 closer to the fixed bracket 274 and the fixed bracket 274 are lower than the connection portions between the other two flexible connectors 275 and the fixed bracket 274. The structures of the fixed pulleys 273 and the flexible connectors 275 are designed in the preceding manner so that the flexible connectors 275 are arranged to avoid each other, thereby preventing the interference and collision between multiple flexible connectors 275 and ensuring that the mold clamp 276 below can be raised and lowered smoothly. Moreover, the connection points between the multiple flexible connectors 275 and the mold clamp 276 form a rectangle so that when the fixed bracket 274 moves, the rising heights of the connection ends of the flexible connectors 275 are consistent, thereby ensuring the stable lifting of the mold clamp 276.

Moreover, in this embodiment, the first drive mechanism 430, the second drive mechanism 450, the third drive mechanism 220, the fourth drive mechanism 230, the fifth drive mechanism 250, and the sixth drive mechanism 272 are telescopic cylinders. The telescopic cylinders enable smoother movement of multiple components. Moreover, since the telescopic cylinders are placed horizontally, the occupied longitudinal space can be reduced, the tilting of cylinders caused by uneven forces can be avoided, and the service life of the cylinders can be extended.

Moreover, two first-stage transfer guide rails 410, two second-stage transfer guide rails 440, two first-stage translational guide rails 210, two second-stage translational guide rails 240, and two third-stage translational guide rails 260 are provided. Two sides of each of multiple components are slidably connected to the corresponding guide rails, thereby guiding the movement of the multiple components, enabling the components to operate smoothly and reliably, and improving the working stability of the mold replacement device. Moreover, the multiple guide rails are provided so that the movement stability and working stability of the components and the drive mechanisms connected to the components can be further improved. Furthermore, the multiple guide rails can provide a guiding function, thereby ensuring the positioning accuracy during hoisting and transferring and improving the efficiency of replacing the old mold 12 with the new mold 11. The details are not repeated here.

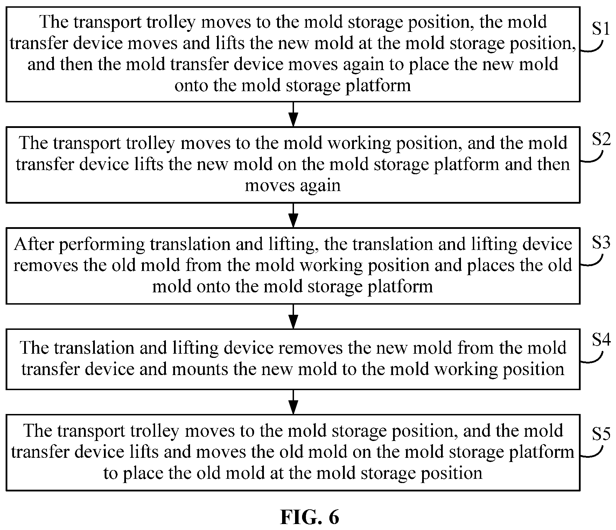

As shown in FIG. 6, this embodiment further provides a mold replacement method applied to the mold replacement device described in any of the preceding solutions. The method includes the steps below.

In S1, the transport trolley 100 moves to the mold storage position, the mold transfer device 400 moves and lifts the new mold 11 at the mold storage position, and then the mold transfer device 400 moves again to place the new mold 11 onto the mold storage platform 300.

In S2, the transport trolley 100 moves to the mold working position, and the mold transfer device 400 lifts the new mold 11 on the mold storage platform 300 and then moves again.

In S3, after performing translation and lifting, the translation and lifting device 200 removes the old mold 12 from the mold working position and places the old mold 12 onto the mold storage platform 300.

In S4, the translation and lifting device 200 removes the new mold 11 from the mold transfer device 400 and mounts the new mold 11 to the mold working position.

In S5, the transport trolley 100 moves to the mold storage position, and the mold transfer device 400 lifts and moves the old mold 12 on the mold storage platform 300 to place the old mold 12 at the mold storage position.

The mold replacement method is applied to the mold replacement device for mold replacement. The mold storage platform 300 and the mold transfer device are provided so that while the old mold 12 is removed, the new mold 11 can be replaced, without manual intervention or operation, thereby automatically replacing the old mold 12 with the new mold 11. In this case, mold replacement efficiency can be improved. Moreover, the mold replacement device has a simple and reliable structure and occupies a relatively small space, thereby being capable of satisfying the mold replacement requirements of different operating spaces.

The working method and working process of the mold replacement device in this embodiment are described in detail below.

In the first step, the transport trolley 100 moves to the mold storage position.

In the second step, the second-stage transfer guide rail 440 extends from the first-stage transfer guide rail 410, and the lifting platform 420 moves on the second-stage transfer guide rail 440 to a position below the new mold 11. After the lifting platform 420 lifts the new mold 11, the lifting platform 420 moves with the second-stage transfer guide rail 440 to a position above the mold storage platform 300. The lifting platform 420 descends, the new mold 11 is temporarily stored on the mold storage platform 300, and then the second-stage transfer guide rail 440 returns to the original position.

In the third step, the transport trolley 100 moves to the mold working position (in this embodiment, a tire vulcanizing machine is at the mold working position), and the first-stage translational guide rail 210, the second-stage translational guide rail 240, and the third-stage translational guide rail 260 move such that the positioning cylinders 201 are aligned with the positioning holes at the mold working position. At this time, the mold transfer device 400 lifts the new mold 11 and transfers the new mold 11 to the preset position along the first direction.

In the fourth step, the hoisting mechanism 270 moves to the farthest end, the hoisting mechanism 270 lowers the mold clamp 276, the mold clamp 276 clamps the old mold 12, and then the mold clamp 276 is raised again such that the positioning posts 2761 are inserted into the avoidance holes 2711. Then, the hoisting mechanism 270 transports the old mold 12 to the mold storage platform 300 along the first direction and the second direction.

In the fifth step, the translation and lifting device 200 operates in the reverse order of the fourth step to transport the new mold 11 on the mold transfer device 400 to the mold working position, thereby completing the mold replacement.

In the sixth step, the transport trolley 100 moves again to the mold storage position and transports the old mold 12 to the mold storage position in the reverse order of the second step, thereby storing the old mold 12.

## Claims

1. A mold replacement device, comprising:
a transport trolley (100) configured to reciprocate between a mold storage position and a mold working position;
a translation and lifting device (200) disposed on the transport trolley (100) and configured to move a new mold (11) or an old mold (12) along at least one of a first direction or a second direction;
a mold storage platform (300) fixedly connected to the transport trolley (100) and located below the translation and lifting device (200), wherein the mold storage platform (300) is configured to carry the new mold (11) or the old mold (12); and
a mold transfer device (400) disposed below the mold storage platform (300) and configured to lift the new mold (11) or the old mold (12) on the mold storage platform (300) along the second direction and transfer the new mold (11) or the old mold (12) on the mold storage platform (300) along the first direction.

2. The mold replacement device of claim 1, wherein the mold transfer device (400) comprises a first-stage transfer guide rail (410) extending along the first direction, the first-stage transfer guide rail (410) is fixedly connected to the transport trolley (100), the first-stage transfer guide rail (410) is slidably connected to a lifting platform (420), and the lifting platform (420) is configured to lift the new mold (11) or the old mold (12) along the second direction and transfer the new mold (11) or the old mold (12).

3. The mold replacement device of claim 2, wherein the mold transfer device (400) further comprises:
a first drive mechanism (430) fixedly connected to the first-stage transfer guide rail (410);
a second-stage transfer guide rail (440), wherein the second-stage transfer guide rail (440) is slidably connected to the first-stage transfer guide rail (410) and extends along the first direction;
a second drive mechanism (450) fixedly connected to the second-stage transfer guide rail (440); and
the lifting platform (420);
wherein the second-stage transfer guide rail (440) is connected to an output end of the first drive mechanism (430), and an output end of the second drive mechanism (450) is connected to the lifting platform (420) so that the lifting platform (420) is slidably connected to the second-stage transfer guide rail (440) along the first direction.

4. The mold replacement device of claim 3, wherein a support roller (441) is fixedly connected to one end of the second-stage transfer guide rail (440) facing away from the transport trolley (100).

5. The mold replacement device of claim 1, wherein the translation and lifting device (200) comprises:
a first-stage translational guide rail (210) extending along the first direction, a third drive mechanism (220), and a hoisting mechanism (270), wherein the third drive mechanism (220) and the hoisting mechanism (270) are disposed on the first-stage translational guide rail (210), an output end of the third drive mechanism (220) is connected to the hoisting mechanism (270), the hoisting mechanism (270) is slidably connected to the first-stage translational guide rail (210), and the hoisting mechanism (270) is configured to hoist the new mold (11) or the old mold (12).

6. The mold replacement device of claim 5, wherein the translation and lifting device (200) further comprises a fourth drive mechanism (230) and a second-stage translational guide rail (240), wherein the fourth drive mechanism (230) is disposed on the first-stage translational guide rail (210), the second-stage translational guide rail (240) is slidably connected to the first-stage translational guide rail (210) and extends along the first direction, an output end of the fourth drive mechanism (230) is connected to the second-stage translational guide rail (240), and the hoisting mechanism (270) is slidably connected to the first-stage translational guide rail (210) and the second-stage translational guide rail (240).

7. The mold replacement device of claim 6, wherein the translation and lifting device (200) further comprises a fifth drive mechanism (250) and a third-stage translational guide rail (260), wherein the fifth drive mechanism (250) is disposed on the first-stage translational guide rail (210), the third-stage translational guide rail (260) is connected to an output end of the fifth drive mechanism (250), the third-stage translational guide rail (260) extends along the first direction and is slidably connected to the first-stage translational guide rail (210) and the second-stage translational guide rail (240), the hoisting mechanism (270) is slidably connected to the third-stage translational guide rail (260), a positioning cylinder (201) is disposed at one end of the second-stage translational guide rail (240) facing away from the transport trolley (100), and an output end of the positioning cylinder (201) is configured to insert into a positioning hole of an external device.

8. The mold replacement device of any one of claims 5 to 7, wherein the hoisting mechanism (270) comprises:
a movable platform (271) slidably connected to the first-stage translational guide rail (210);
a sixth drive mechanism (272) and a fixed pulley (273) that are disposed on the movable platform (271);
a fixed bracket (274) connected to an output end of the sixth drive mechanism (272), wherein the fixed bracket (274) is slidably connected to the first-stage translational guide rail (210) and is capable of reciprocating along the first direction; and
a flexible connector (275), wherein a first end of the flexible connector (275) is fixedly connected to the fixed bracket (274), and a second end of the flexible connector (275) passes around the fixed pulley (273) and is suspended with a mold clamp (276) configured to fix the new mold (11) or the old mold (12).

9. The mold replacement device of any one of claims 1 to 7, further comprising:
a lifting base (510) fixedly connected to the transport trolley (100);
a lifting drive mechanism (520) fixedly connected to the lifting base (510); and
a gantry assembly (530) connected to an output end of the lifting drive mechanism (520), wherein the lifting drive mechanism (520) is configured to enable the gantry assembly (530) to slide on the lifting base (510) along the second direction, and the gantry assembly (530) is fixedly connected to the translation and lifting device (200).

10. A mold replacement method, the method being applied to the mold replacement device of any one of claims 1 to 9 and comprising:
moving, by the transport trolley (100), to the mold storage position, moving and lifting, by the mold transfer device (400), the new mold (11) at the mold storage position, and then moving, by the mold transfer device (400), again to place the new mold (11) onto the mold storage platform (300);
moving, by the transport trolley (100), to the mold working position, and lifting, by the mold transfer device (400), the new mold (11) on the mold storage platform (300), and then moving, by the mold transfer device (400), to a preset position;
removing, by the translation and lifting device (200), the old mold (12) from the mold working position after the translation and lifting device (200) performs translation and lifting, and then placing, by the translation and lifting device (200), the old mold (12) onto the mold storage platform (300);
removing, by the translation and lifting device (200), the new mold (11) from the mold transfer device (400) and mounting, by the translation and lifting device (200), the new mold (11) to the mold working position; and
moving, by the transport trolley (100), to the mold storage position, and lifting and moving, by the mold transfer device (400), the old mold (12) on the mold storage platform (300) to place the old mold (12) at the mold storage position.
